# EUROPÄISCHE PATENTANMELDUNG

(11) **EP 2 071 237 A1**
(43) Veröffentlichungstag der Anmeldung: **17.06.2009**
(21) Anmeldenummer: 08171442.0
(22) Anmeldetag: 12.12.2008
(51) Int. Cl.: F23G 7/00, F23G 5/20, F27B 7/36, C02F 11/08, F27B 7/20

(54) **Verfahren und Vorrichtung zur thermischen Behandlung von Klärschlamm in einer Müllverbrennungsanlage**

(30) Priorität: 14.12.2007 CH 19442007
(71) Anmelder: Doikos Investments, Ltd., St. Helier, Channel Islands Jersey JE4 8TZ (GB)
(72) Erfinder: Müller-Basler, Thomas, 5040 Schöftland (CH); Stiefel, Martin, 8626 Ottikon (CH)
(74) Vertreter: Felber, Josef

(57) **Zusammenfassung**

Das Verfahren zum Nachbehandeln von Klärschlamm (2) basiert darauf, dass der Klärschlamm in einem Drehrohrofen (3) unter Zufuhr des Rauchgases (4) aus einer Müllverbrennungsanlage verbrannt wird. Hierzu wird Wasserdampf (6) in den Drehrohrofen (3) eingespeist, sodass der Restsauerstoff im Rauchgas (4) mit dem Restkohlenstoff im Klärschlamm mit Unterstützung des Wasserdampfes (6) verbrennt. Die Vorrichtung zur Durchführung dieses Verfahrens besteht aus einem geneigten Drehrohr (1), kraft dessen Drehung der Klärschlamm (2) in seinem Inneren umschichtbar und in Längsachse des Drehrohres (1) förderbar ist. Es ist eine Beschickeinrichtung für den Klärschlamm (2) und eine Einspeisung für das heisse Rauchgas (4) vorhanden, sowie ein Kamin (7) zur Abfuhr des Rauchgases (8), sowie mindestens eine in das Drehrohr (1) ragende Lanze (5) für die Zufuhr von Wasserdampf (6) für den Verbrennungsprozess.

## Beschreibung

Klärschlamm aus der Abwasserklärung enthält noch erhebliche Anteile von Kohlenstoff. In getrockneter Form kann aber solcher Schlamm nur dann beliebig ausgebracht oder deponiert werden, wenn er inert ist. Jeder Rest-Kohlenstoff in einem Trockenschlamm oder in einer Schlacke aber macht dieses Material zum Sondermüll, das mit hohen Kosten in gesicherten Deponien abgelagert werden muss.

Wegen der hohen Schadstoff-Fracht der Abwässer ist der Klärschlamm heute teilweise so stark kontaminiert, dass seine Verwendung als Düngemittel in der Landwirtschaft zunehmend schwieriger wird. Ein weiterer Aspekt beim Klärschlamm aus Abwässern betrifft die Unsicherheit hinsichtlich der Verbreitung von BSE, da Ursprung und Verbreitung derzeit nicht hinreichend wissenschaftlich erwiesen sind. Auch die Verbringung auf Deponien ist nicht frei von Problemen. Geruchsbelästigungen sind fast nicht zu vermeiden und einer Gefährdung des Grundwassers kann nur mit aufwendigen Maßnahmen begegnet werden.

Bisher wurden verschiedene Verfahren getestet, bzw. großtechnisch eingesetzt, die zum einen die direkte Verbrennung des Klärschlamms oder zum anderen auch dessen Vorbehandlung (Trocknung) vor dem Einsatz in Verbrennungsanlagen beinhalteten. Ziel dieser Massnahmen ist stets, eine bessere Qualität des Klärschlammes im Hinblick auf eine Weiterverwendung zu erzielen. Die Nachteile dieser Verfahren liegen darin, dass Zusatzenergie sowohl bei der direkten Verbrennung oder aber für die Vortrocknung eingesetzt werden muss. Der Grund hierfür liegt darin, dass der zu behandelnde Klärschlamm bei der Anlieferung nur einen Anteil von ca. 20-30 Gewichtsprozent an Trockensubstanz aufweist. Der daraus resultierende Heizwert liegt deutlich unter der Grenze der Selbstgängigkeit zur Verbrennung.

Die Aufgabe der vorliegenden Erfindung ist es, ein Verfahren und eine Vorrichtung zum Nachbehandeln von Klärschlamm in einer Müllverbrennungsanlage anzugeben, mit dem Ziel, dessen Restanteil an Kohlenstoff weiter zu senken oder den Kohlenstoff-Anteil sogar ganz zu eliminieren, um einen möglichst grossen Anteil an inerter Schlacke zu gewinnen, sodass die oben aufgeführten Nachteile vermieden werden und solche Schlacke im Idealfall ausgebracht werden kann, oder aber deponiert oder verbaut werden kann.

Diese Aufgabe wird gelöst von einem Verfahren zum Nachbehandeln von Klärschlamm, wobei der Klärschlamm in einem Drehrohrofen unter Zufuhr des ohnehin anfallenden Rauchgases aus einer Müllverbrennungsanlage nachverbrannt wird, und wozu Wasserdampf in den Drehrohrofen eingespeist wird, sodass der Restsauerstoff im Rauchgas mit dem Restkohlenstoff im Klärschlamm mit Unterstützung des Wasserdampfes verbrennt.

Diese Aufgabe wird des Weiteren gelöst von einer Vorrichtung zur Durchführung dieses Verfahrens, die sich dadurch auszeichnet, dass sie ein geneigtes Drehrohr aufweist, kraft dessen Drehung der Klärschlamm im Innern des Drehrohrs umschichtbar und in Längsachse des Drehrohres förderbar ist, weiter eine Beschickungseinrichtung für den Klärschlamm und eine Einspeisung für das heisse Rauchgas aus einer Müllverbrennungsanlage, sowie einen Kamin zur Abfuhr des Rauchgases, sowie mindestens eine in das Drehrohr ragende Lanze für die Zufuhr von Wasserdampf für den Verbrennungsprozess.

Diese thermische Behandlung von Klärschlamm bietet folgende Vorteile:
1. Volumenreduktion der Reststoffe auf eine Restvolumen von ca. 15 %,
2. Gewichtsreduzierung der Reststoffe auf eine Restgewicht von ca. 22 %,
3. Nutzung der Verbrennungswärme des Klärschlamms (ca. 0,125 MW/t).
Aus diesem Grund wurde das hier vorgeschlagene Verfahren konzipiert, das diese vorgenannten Nachteile kompensiert und eine energieautarke Entsorgung in Kombination mit einer vorhandenen Müllverbrennungsanlage beinhaltet. Dabei können die Rauchgase aus der Müllverbrennung zusammenkombiniert mit einer Sattdampf-Einspritzung für die Restverbrennung des Klärschlammes verwendet werden.

Eine beispielsweise Vorrichtung wird anhand der schematischen Zeichnung offenbart und nachfolgend beschrieben und ihre Funktionsweise zum Betrieb des Verfahrens wird erklärt. Die Vorrichtung schliesst ein Drehrohr ein, das hier der Länge nach aufgeschnitten gezeigt ist.

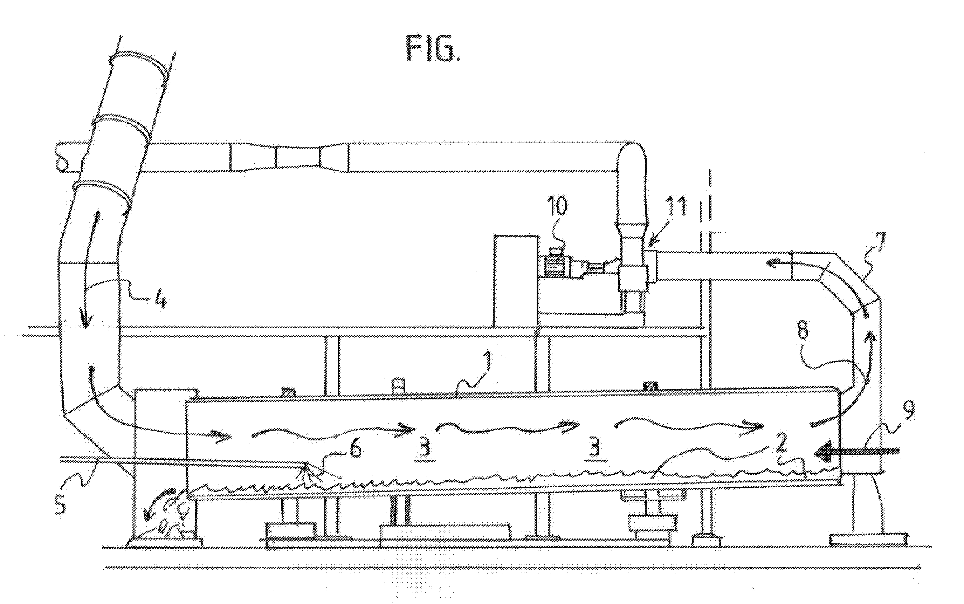

Das leicht geneigt angeordnete Drehrohr 1 bildet einen Drehrohrofen 3, in dessen Inneres der Klärschlamm 2 vom oberen Ende her, also in der Zeichnung von rechts, zugeführt wird, wie mit dem Pfeil 9 angedeutet, und im Innern nachverbrannt wird. Die Zufuhr des Klärschlammes 2 erfolgt mittels einer geeigneten Beschickeinrichtung, die eine dosierte Beschickung erlaubt. Durch das Drehen des Drehrohres 1 wird der Klärschlamm 2 im Innern ständig umgeschichtet und vorwärts gefördert, das heisst in der Zeichnung von rechts nach links verschoben. Der Ofen, das heisst das Drehrohrinnere 3 wird von der unteren Seite her mit Rauchgas 4 und dem darin befindlichen restlichen Sauerstoff aus einer nebenan stehenden Müllverbrennungsanlage versorgt. Dieses Rauchgas 4 befindet sich auf einer Temperatur um die 850°C und enthält ca. 7 Gew.-% Sauerstoff. Der Volumenstrom des zugeführten Rauchgases 4 liegt in der Grössenordnung von ca. 6'500 Nm³ pro Stunde und ist selbstverständlich abhängig von der Anlagen- und Drehrohrgrösse. Er strömt entgegen der Förderrichtung des Klärschlammes 2 durch das Drehrohr 1. Durch die im Drehrohrofen 3 ablaufende Verbrennung des im Klärschlamm 2 enthaltenen Kohlenstoffes kann die Klärschlamm-Menge, das heisst sowohl das Volumen wie auch das Gewicht, erheblich reduziert werden. Um eine möglichst vollständige Verbrennung zu erzielen, wird zusätzlich zum Rauchgas 4, welches zum Heizen und Zuführen von Sauerstoff dient, dosiert Wasser oder noch besser Sattdampf zuführt und dieser wird direkt in die Verbrennungszone eingespritzt. Es kann auch überhitzter Dampf verwendet werden. Der Sattdampf kann von der Kesseltrommel entnommen werden, oder es wird überhitzter Dampf beim Austritt aus dem Kessel der Müllverbrennungsanlage entnommen. Der Wasserdampf 6 wirkt in der Verbrennung nach folgenden chemischen Reaktionen: Zunächst reagiert der Restkohlenstoff C mit dem Wasserdampf 2H₂O nach der Formel:

C + 2H₂O → CO₂ + 2H₂.

Der entstandene Wasserstoff H₂ reagiert sodann mit dem Restsauerstoff O₂ nach der Formel

2H₂ + O₂ → 2 H₂O

und es entsteht Wasser H₂O, das als Dampf zusammen mit dem Kohlendioxid CO₂ über den Kamin 7 mit dem Rauchgas 8 aus der Klärschlamm-Nachverbrennung abgeht.

Der Sattdampf wird vorteilhaft dem Dampfkreislauf, welcher zu den Primärluft-Vorwärmern der Müllverbrennungsanlage führt, über ein Handventil entzogen. Er befindet sich auf ca. 250°C Temperatur und einem Druck von ca. 35 bar, und als Massenstrom kann man sich eine Menge von etwa 50kg pro Stunde vorstellen, wobei dieser Betrag natürlich von der Grösse der Anlage abhängig ist. Mindestens eine doppelmantelige, etwa 4 Meter lange Lanze 5 von 45mm Durchmesser bringt den Dampf 6 durch eine umgebaute Schauöffnung in den Drehrohrofen 3 direkt auf die Ausbrandzone des Klärschlammes 2. Dort wird der Dampf durch feine Düsen in der Lanzen-Mantelfläche verteilt. Die Lanze 5 ist in einer stabilen Befestigung geführt und gegenüber dem Drehrohr 1 abgedichtet, wobei ein Abschnitt von ca. 3 Metern in das Drehrohr 1 hineinragt. Die Temperatur der Lanze 5 wird im Innern des Drehrohrs 1 auf ca. 200°C bis 250°C gehalten, was mittels einer Kühlung erfolgt, indem ein Teil des Dampfes wieder durch das Innenrohr der Lanze 5 zurück geführt wird und Wärme abführt, denn die Umgebungstemperatur der Lanze 5 liegt bei ca. 850°C. Vor und nach der Lanze 5 ist je ein Regulierventil und ein Volumenstrom-Messgerät angebracht. Damit kann das Gleichgewicht zwischen dem eingebrachten Dampf 6 und dem Anteil der Kühlung manuell reguliert werden. Der restliche Dampf wird einem Leckage-Tank zugeführt, welcher im Dampfhauptkreislauf integriert ist. Um das Rauchgas gezielt zu dosieren, kann ein Ventilator 11 eingesetzt werden, der von einem Elektromotor 10 angetrieben wird. Nach dem Ausbrand gelangt das vom Sauerstoff befreite Rauchgas 8 durch den Kamin 7 nach aussen. Auch die Drehgeschwindigkeit des Drehrohrs 1 kann reguliert werden, sowie die Menge des beschickten Klärschlammes 2 und des zugeführten Sattdampfes 6. Mit diesen Freiheitsgraden lässt sich der Verbrennungsprozess optimieren, sodass eine nahezu vollständige Verbrennung sichergestellt werden kann. Mit diesem Verfahren gelingt es, den Kohlenstoffanteil im Klärschlamm auf ca. 2 Gewichtsprozesse hinunterzudrücken.

## Patentansprüche

1. Verfahren zum Nachbehandeln von Klärschlamm, wobei der Klärschlamm (2) in einem Drehrohrofen (3) unter Zufuhr des ohnehin anfallenden Rauchgases (4) aus einer Müllverbrennungsanlage nachverbrannt wird, und wozu Wasserdampf (6) in den Drehrohrofen (3) eingespeist wird, sodass der Restsauerstoff im Rauchgas (4) mit dem Restkohlenstoff im Klärschlamm (2) mit Unterstützung des Wasserdampfes (6) verbrennt.

2. Verfahren zum Nachbehandeln von Klärschlamm nach Anspruch 1, ***dadurch gekennzeichnet,* dass** der Wasserdampf (6) durch mindetens eine Lanzen (5), die in den Drehrohrofen (3) hineinragt, eingedüst wird, und diese Lanze (5) über einen Teilrücklauf des Wasserdampfes in ihrem Innern von demselben gekühlt wird.

3. Verfahren zum Nachbehandeln von Klärschlamm nach einem der vorangehenden Ansprüche, ***dadurch gekennzeichnet,* dass** der Wasserdampf (6) durch mehrere Düsen in der Mantelfläche der Lanze (5), die in den Drehrohrofen (3) hineinragt, in das Drehrohr (1) eingedüst wird.

4. Verfahren zum Nachbehandeln von Klärschlamm nach einem der vorangehenden Ansprüche, ***dadurch gekennzeichnet,* dass** dem nachzuverbrennenden Klärschlamm (2) soviel Wasserdampf 2H₂O zugeführt wird, dass dessen Restkohlenstoff C mit dem Wasserdampf 2H₂O nach der Formel C + 2H₂O → CO₂ + 2H₂ reagiert, und der entstandene Wasserstoff H₂ sodann mit dem Restsauerstoff O₂ im Rauchgas (4) nach der Formel 2H₂ + O₂ → 2 H₂O reagiert, sodass Wasserdampf entsteht, welcher zusammen mit dem Kohlendioxid CO₂ über den Kamin (7) mit dem Rauchgas (8) abgeht.

5. Vorrichtung zur Durchführung des Verfahrens nach Anspruch 1, ***dadurch gekennzeichnet,* dass** sie ein geneigtes Drehrohr (1) aufweist, kraft dessen Drehung der Klärschlamm (2) im Innern des Drehrohrs (1) umschichtbar und in Längsachse des Drehrohres (1) förderbar ist, weiter eine Beschickeinrichtung für den Klärschlamm (2) und eine Einspeisung für das heisse Rauchgas (4) aus einer Müllverbrennungsanlage, sowie einen Kamin (7) zur Abfuhr des Rauchgases (8), sowie mindestens eine in das Drehrohr (1) ragende Lanze (5) für die Zufuhr von Wasserdampf (6) für den Verbrennungsprozess.

6. Vorrichtung nach Anspruch 5, ***dadurch gekennzeichnet,* dass** die Lanze (5) einen doppelten Mantel aufweist, sodass in ihrem Innern ein Teilstrom des zugeführten Dampfstromes zu Kühlzwecken rückführbar ist.

7. Vorrichtung nach einem der Ansprüche 5 bis 6, ***dadurch gekennzeichnet,* dass** die Lanze (5) im Aussenmantel mehrere Düsen aufweist, über welche der Wasserdampf (6) in das Drehrohrinnere (3) eindüsbar ist.

8. Vorrichtung nach einem der Ansprüche 5 bis 7, ***dadurch gekennzeichnet,* dass** mehrer Lanzen (5) vorhanden sind, über welche Wasserdampf (6) in das Drehrohrinnere (3) eindüsbar sind.

9. Vorrichtung nach einem der Ansprüche 5 bis 8, ***dadurch gekennzeichnet,* dass** im Kamin (7) ein Ventilator (11) angeordnet ist, der von einem Elektromotor angetrieben ist und mittels dessen die Rauchgasmenge dosierbar ist.
